# EUROPEAN PATENT SPECIFICATION

(11) **EP 2 290 235 B1**
(45) Date of publication and mention of the grant of the patent: **18.05.2016**
(21) Application number: 10008969.7
(22) Date of filing: 28.08.2010
(51) Int. Cl.: F03D 17/00, F03D 7/04, G01L 5/00

(54) **Device and method for detecting the loading of pivoted rotor blades**
Vorrichtung und Verfahren zur Erfassung der Belastung von sich drehenden Laufschaufeln
Dispositif et procédé de détection du chargement de pales de rotor pivotantes

(30) Priority: 28.08.2009 DE 102009039030
(43) Date of publication of application: 02.03.2011
(73) Proprietor: PRÜFTECHNIK Dieter Busch AG, 85737 Ismaning (DE)
(72) Inventor: Lösl, Johann, 84172 Buch am Erlbach (DE); Becker, Edwin, 48734 Reken (DE)

(56) References cited:
- EP-A2- 1 528 356
- WO-A1-2008/090253
- WO-A1-2009/092390
- WO-A1-2009/097867
- WO-A2-2008/014935
- YAO XINGJIA ET AL: "Individual pitch control for variable speed turbine blade load mitigation", SUSTAINABLE ENERGY TECHNOLOGIES, 2008. ICSET 2008. IEEE INTERNATIONAL CONFERENCE ON, IEEE, PISCATAWAY, NJ, USA, 24 November 2008 (2008-11-24), pages 769-772, XP031442272, ISBN: 978-1-4244-1887-9

## Description

### Technical Field

The invention relates to a device and method for detecting the loading of rotor blades when the latter are suspended in a rotary bearing arrangement. These pivoted rotor blades are used in wind power plants, and also in helicopters.

### Background Art

European Patent Application EP 2 075 561 A2 discloses a method and a device with which rotor blades loads are measured. Here, proximity sensors or strain gauges are used. Attachment of these sensors to or in the vicinity of the main shaft or in the vicinity of the bearings is preferred for adjusting the angle of the rotor blades. This application relates to the problem of two coordinate systems for measurement with reference to the nacelle of a wind power plant and with reference to the rotor hub.

International Patent Application Publication WO 2009/095025 A1 suggests measuring the loading of the rotor blades using FBG sensors in the rotor blades.

Commonly owned German Patent Application DE 10 2008 061 553.6 of one of the present inventors relates to a device with which the deformation of a bearing ring can be determined with a fibre optic sensor. WO 2009/097867 A1 shows also a device for monitoring loads and vibration in a beaning of a wind turbine blade.

Therefore, the direct measurement of the loading of rotor blades is associated with problems because strain gauges are either unreliable or, if they are made with fibre optics, are very expensive. The direct measurement of the loading of the rotor blades should take place distributed over the length of the rotor blade; this is difficult at the current extensions of rotor blades of more than 50 m. For pivoted rotor blades there is the additional problem that power supply to the sensors and the delivery of their signals to the control unit which is ordinarily mounted in the nacelle in wind power plants must take place wirelessly or with slip rings by way of two rotary joints, specifically the bearing of the rotor blade and the main bearing of the wind power plant; this is complex.

### Summary of invention

This invention circumvents these and other problems in the measurement of the loading of the rotor blades by measuring a quantity which is directly influenced by the rotor blade load, specifically measurement of the deformation of a bearing or a part of a bearing such as a bearing ring for rotation of the rotor blade for pitch adjustment. Here, deformation is defined not only as warping of a bearing ring, but can also be a misalignment, in which one bearing ring travels into a new position relative to another, for example, by its being tilted, or due to misalignment of roll bodies. This generally understood deformation can be measured especially easily and economically with proximity sensors. Alternatively deformation can also be detected by way of fibre optic sensors.

One special advantage of the invention is that the rotor blade loading to be detected is not determined in the rotor blade itself as in Application EP 2 075 561 A2 , but in the vicinity of the rotor hub or in the rotor hub itself. It is not necessary to bridge distances of more than 10 m within the rotor blade or to transmit signals wirelessly or via slip rings from the rotor blade into the hub or the nacelle of the wind power plant.

An electronic evaluation device establishes the relationship between the deformation of the bearing ring and the loading of the rotor blade. This electronic evaluation device can be integrated into other electronic controls, such as the control of rotor blade adjustment, which is often mounted in the rotor hub of the wind power plant, or the control of the entire wind power plant in the nacelle.

In one advantageous embodiment of the invention, a one-dimensional or multidimensional inclinometer is additionally incorporated into the measurement device. The angular position of the rotor hub in the direction of rotation is detected via this inclinometer. If the inclinometer also detects a tilt of the direction which is axial with reference to the rotation of the rotor hub, the tilt of the nacelle of the wind power plant is also detected.

With this measurement device, it is possible to detect both aerodynamic loads on the rotor blade and also mechanical ones which are caused, for example, by imbalances. These loads can then be used in the evaluation unit to intervene into the control of the wind power plant or the rotary adjustment of the rotor blades or the adjustment of parts of the rotor blades. Dynamic balancing of individual rotor blades is also possible, as is described in International Patent Application Publication WO 2009/033472 A2.

In another preferred version, permanent structural changes of the rotor blade can be recognized. These structural changes can be breaks or delaminations. For example, if part of the rotor blade on the front edge partially detaches, this part will lead the remaining rotor blade after top dead centre is passed. When the rotor blade is in the lower part of rotation, there will be an instant at which the part which has detached from the front edge of the rotor blade again strikes the remaining rotor blade. Conversely, if a part on the back of the rotor blade partially detaches, striking of the part which trails the remaining rotor blade on the remaining rotor blade after passing top dead centre, but still in the upper part of rotation, takes place. This change of load of the rotor blade is expressed in the deformation of the bearing ring of the rotor blade, in the form of irregularities in the deformation characteristic over time. For example, if the angular position of the rotor blade is detected at the same time, for example, by way of an inclinometer, the site of the damage and/or type of damage can be determined.

The invention is described in further detail below with reference to the accompanying drawing figures

### Brief description of drawings

Figure 1 is a perspective view of a rotor hub of a wind power plant which is intended for accommodating three rotor blades and with which device and method of the invention are implemented.
Figure 2 is a cross sectional view of a part of a rotor hub with the root of a rotor blade and part of the nacelle to which the rotor hub is connected.

### Description of embodiments

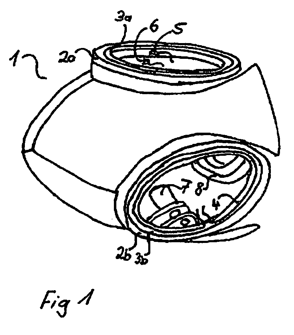

Figure 1 shows a rotor hub 1 of a wind power plant which is intended, here, for accommodating three rotor blades. The rotor blades are pivotally mounted in outer bearing rings 2a, 2b and inner bearing rings 3a, 3b (the third bearing ring is not shown). The angular position of the rotor blades can be changed by way of a drive 7. The connection to gearing in the nacelle of the wind power plant takes place via the main bearing 8.

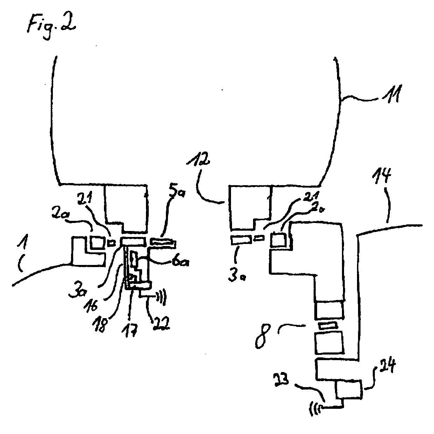

The inner ring 3a is monitored using two proximity sensors 5, 6. These proximity sensors are securely joined to the rotor hub 1 by way of holding devices (not shown). The proximity sensors detect deformation of the bearing ring 3a. These proximity sensors 5, 6 can be inductive sensors. Here, the sensor 5 measures deformation in the radial direction relative to the axis of rotation of the bearing. The sensor 6, conversely, measures deformation in the axial direction relative to the axis of rotation of the bearing. These proximity sensors are connected by way of cables to an evaluation unit (not shown in Fig. 1, reference numeral 17 in Fig.2). A second pair of sensors on the same bearing ring 3a can usefully measure when it is mounted at another peripheral position. In particular, the deformation of the bearing ring in the two dimensions of the radial plane of the bearing can be measured with a second radially attached sensor (not shown).

The evaluation unit (not shown in Fig. 1, reference numeral 17 in Fig.2) which is shown mounted to the rotor blade in Fig. 2 can also be mounted within the rotor hub 1. It can also be a component of a control unit for setting the rotary angle of the rotor blades. The evaluation unit can in a further embodiment be mounted in the nacelle of the wind power plant. Even if the evaluation unit is mounted in the nacelle, it can be a component of a control unit for the wind power plant there. The evaluation unit can detect and further process the results of measuring the deformation of the bearing rings 3a, 3b. In this further processing, the loading of the rotor blade can be determined. Here, aerodynamic loads which lead to deformation of the rotor blade can be determined. These aerodynamic loads arise, for example, in stagnation in front of the tower of the wind power plant. Mechanical loads, for example, due to mechanical unbalances, can also be determined in this way.

Since the evaluation unit detects the deformation of the bearing rings, which also includes misalignments or tilting, monitoring of the bearing, bearing condition and the play in the bearing is possible here in exactly the same way. Thus, there is a linkage to the method of traditional condition monitoring in the monitoring of bearings.

For example, a fibre optic sensor 4 is peripherally attached in the second inner ring 3b; it detects the deformation of the bearing ring 3b and is connected to an evaluation unit within the rotor hub 1 or within the nacelle. These fibre optic sensors can determine both the deformation of the bearing ring in the axial direction and also in the radial direction relative to the axis of rotation of the bearing. In one advantageous configuration, these fibre optic sensors can be made as FBG (Fibre Bragg Grating) sensors. These Bragg gratings are zones which have been introduced into the glass fibres with an altered index of refraction. It can be recognized on the transitions between zones with a different index of refraction whether there is deformation of the fibres. Depending on the distribution of these transitions between zones with a different index of refraction, the deformation of the fibres can be measured, resolved as to location.

By way of example, two different techniques for measuring the deformation of bearing rings were shown here. However, in practice one and the same technique will more likely be used on a machine for all bearing rings of adjustable rotor blades. This means that for a given plant either all bearings will be monitored by inductive sensors for deformation or all bearings will be equipped with FBG sensors. It goes without saying that, like the inner rings, the outer rings of the rotary joints can be equipped with sensors in accordance with the invention.

In one advantageous exemplary embodiment, the evaluation unit mounted in the rotor hub contains an inclinometer or is connected to an inclinometer. This inclinometer detects the rotary angle position of the rotor hub 1 with reference to terrestrial gravitation. Thus, for example, it can be detected if a rotor blade is pointing vertically down and is, therefore, located in the stagnation in front of the tower of the wind power plant. Moreover, an inclinometer which is made multidimensional can also determine the angular position in the axial direction of the rotor hub 1. The inclinometer can also be mounted in the vicinity of the sensors for the deformation of the bearing rings.

The result of measuring the deformation and the loading of the rotor blade determined therefrom are sensibly used as parameters to be taken into account in the control units of the wind power plant. This control unit is, for example, the control for the rotary position of the rotor blade angle. Another possibility is to use the determined loading of the rotor blade as a parameter for the control for adjusting the aerodynamically active parts of the rotor blades. It is also possible to dynamically change balance weights by way of the ascertained rotor blade loading, for example, by pumping of fluids into the rotor blades, as is described in International Patent Application Publication WO 2009/033472 A2.

Figure 2 contains a more detailed view of how this measuring of the deformation and the loading of the rotor blade can be effected.

The determination of the deformation and the loading of the rotor blade takes place by checking the deformation of the bearing ring. If, for example, only the rotor blade 11 which is at the top dead centre of rotation is being hit by a sudden gust of wind, this rotor blade will be pushed suddenly in the direction of the length of the nacelle 14 towards the back of the nacelle 14 away from the spinning hub 1. If this rotor blade 11 is connected to the inner bearing ring 3a, the movement of the blade which has been caused by the aforementioned sudden gust will cause a shift in the location of the inner bearing ring 3a for this particular blade and also an upward bending of the windward side of this ring. The outer bearing ring 2a is fixedly attached to the spinning hub 1 of the wind energy plant. Fig. 2 contains also a schematic cross sectional view of rollers 21. A detector 6a measuring the distance from inner bearing ring 3a along the direction of the rotor blade which is mounted in parallel to sensor 6 in fig. 1, but located towards the windward tip of the spinning hub 1 will detect a strong increase of the distance because the root 12 of the rotor blade 11 which is connected to inner bearing ring 3a will be lifted on its front windward side out of the outer bearing ring and the ring 3a will be bent in this direction. This increase in distance is caused by the sudden increase of the load. Sensor 6 which is located at 90 degrees from sensor 6a will register only small changes, while sensor 5, assuming that the ring as a whole will also be elongated along the wind direction, will register a decrease in distance to ring 3a, because the diameter of the ring will decrease. Due to the elongation of the ring 3a in the wind direction, sensor 5a will register an increase in distance just like sensor 6a.

This increase in distance detected by sensor 6a is registered when the load added by the sudden gust is uniform over the length and width of the blade. Normally, however the distribution of wind forces over the area of the blade is not uniform but more complex and the positional change of the rotor blade root 12 and the inner bearing ring 3a connecting it to the spinning hub will also be more complex than described above. If a numerical simulation has been performed for this particular type of rotor blade in connection with this particular pivoting bearing or if the reaction of the rotor blade and corresponding bearing to different wind load distributions has been experimentally tested, the electronic evaluation unit 17 is able perform a calculation of the actual load state of the blade from the measured deformation of the bearing ring.

Tests have shown that, with the measurement of the deformation of the bearing ring for torsion of a rotor blade it is possible to determine e.g. the natural frequencies of vibration of a rotor blade. Different wind loads or different kinds of damage (breaks, delamination) will cause changes in the vibration of the rotor blade and also changes in the bending of the bearing ring. These changes and vibrations can be detected by the invention.

In one advantageous configuration of the invention, the deformation of the rotor blade in several dimensions is determined from the determined loading of the rotor blade together with the rotary angle position of the rotor hub which can be determined with the inclinometer 18, since the measurement of the deformation of the bearing ring takes place multi-dimensionally. Thus, it becomes possible to determine the operating deflection shape (ODS) of a rotor blade without high cost for sensors. Measurements of the natural frequencies of the rotor blade for purposes of experimental modal analysis (EMA) are also possible here.

Figure 2 contains also inclinometer 18 which is connected like sensors 5a and 6a to an electronic evaluation unit 17. This electronic evaluation unit 17 is mounted on a holder 16 to the rotor blade and is able to transmit measurement data wirelessly via an antenna 22 from the rotor blade which may be rotated to an antenna 23 which transmits these data to control unit 24 in the nacelle. Of course, control unit 17 may also be mounted in the spinning hub if it is connected by slip rings or wirelessly to sensors 4, 5, 5a, 6, 6a and can wirelessly exchange data with a further control unit in the nacelle. In the latter configuration with control unit 17 in the spinning hub it is not necessary to have an inclinometer on each rotor blade. One inclinometer attached to the spinning hub will suffice if the relative angular positions of the rotor blades with respect to the angular position of this inclinometer are known.

While sensors 5, 5a, 6, 6a shown in Figs. 1 and 2 are shown as inductive proximity sensors, in a preferred embodiment a fibre optic sensor 4 is attached to the inner side of bearing ring 3b, as shown in Fig. 1. This fibre optic sensor for monitoring axial and radial deformation of a bearing ring is described in German Patent Application Publication DE 10 2008 061 553.6. In this application, it is described that the deformation of a bearing ring can be detected both in its axial and radial directions by means of a single sensor shaped like a thread with multiple measurement zones distributed along its length. Thus, the deformation of the bearing ring can be detected not only in the positions given by the positions of single sensors, like the windward position in which sensors 5a and 6a (Fig 2) are mounted, or the direction at a right angle thereto in which sensors 5 and 6 (Fig 1) are mounted. A FBG sensor 4 can contain a great number of zones for the detection of axial or radial deformation of a bearing ring 3b. The use of FBG sensor 4 has the advantage that there is the possibility of having a sensitive zone e.g. in the windward direction or the direction at a right angle thereto. From the description above, it can be seen that these two areas of the ring - windward and at a right angle thereto - will show the largest effects. Given a sufficient number of sensitive zones in the FBG sensor 4, there will always be a sensitive zone of the FBG sensor in these two directions independent of the pitch of the pivotable rotor blade.

When more than one rotor blade is attached to the rotor hub, it is of course useful to determine the loading of each individual rotor blade by means of sensors for deformation of the pertinent bearing ring, determination of the loading taking place from the deformation in an evaluation device which is common to all rotor blades. In this way, differences between these rotor blades can be detected during installation of the rotor blades or shortly afterwards. Thus, the change of behavior of individual rotor blades over time can be monitored. Comparison of the development of the state of the rotor blades over time between the blades of a wind power plant, but also between the blades of several different plants, is possible.

Tests have shown that, with the measurement of the deformation of the bearing ring for torsion of a rotor blade, not only the loading of the rotor blade itself, but also the loading of other components of a wind power plant, such as, for example, the main bearings, brake, gearing, become possible. The natural frequencies of these components of the wind power plant can be easily evaluated on the bearing ring for the rotary adjustment of the rotor blade.

## Claims

1. Device for measuring the loading of at least one pivotable rotor blade with at least one bearing ring arrangement, comprising:
at least one sensor which detects deformation of a bearing ring of the at least one bearing arrangement of the pivotable rotor blade, and **characterised by**
an evaluation device which determines loading of the rotor blade from deformation of the bearing ring detected by the at least one sensor.

2. Device as claimed in claim 1, wherein at least one sensor is at least two proximity sensors.

3. Device as claimed in claim 2, wherein the at least two proximity sensors detect the deformation of the bearing ring in axial and radial directions relative to an axis of rotation of the bearing.

4. Device as claimed in claim 2 or 3, wherein the at least two proximity sensors detect the deformation of the bearing ring in two different directions of the bearing ring which run radially relative to an axis of rotation of the bearing.

5. Device as claimed in claim 1, wherein at least one sensor is a fibre optic sensor.

6. Device as claimed in claim 5, wherein the fibre optic sensor is an FBG sensor.

7. Device as claimed in at least one of the preceding claims, further comprising at least one inclinometer.

8. Device as claimed in claim 7, wherein the inclinometer measures in at least one of axial and radial directions of the rotor hub.

9. Method for determining the loading of a rotor blade with a bearing ring, comprising the steps of:
detecting deformation of a bearing ring of the bearing arrangement of the rotor blade, and **characterised by**
determining loading of the rotor blade from the detected deformation of the bearing ring.

10. Method as claimed in claim 9, wherein the deformation of the bearing ring is determined in several dimensions.

11. Method as claimed in claim 10, wherein the deformation of the bearing ring is determined in radial and axial directions relative to an axis of rotation of the bearing.

12. Method as claimed in at least one of claims 9 - 11, wherein the angular position of a rotor hub which is connected to the rotor blade is determined.

13. Method as claimed in at least one of claims 9 - 12, wherein the angular position of the rotor blade is taken into account in the determination of the loading of the rotor blade.

14. Method as claimed in claim 12, wherein the angular position of a rotor hub which is connected to the rotor blade is taken into account in the determination of the loading of the rotor blade.

15. Method as claimed in claim 14, wherein the angular position of a rotor hub is determined in at least one axial and radial directions of the axis of rotation of the rotor hub.

16. Method as claimed in claim 9, wherein adjustment of the rotary position of the rotor blade is performed based at least in part on the determined loading on the rotor blade.

17. Method as claimed in claim 9, wherein adjustment of the position of parts of the rotor blade is performed based at least in part on the determined load on the rotor blade.

18. Method as claimed in claim 9, wherein adjustment for dynamic balancing of the rotor blade is performed based at least in part on the determined loading on the rotor blade.

## Patentansprüche

1. Vorrichtung zum Messen der Belastung mindestens eines schwenkbaren Rotorflügels mit mindestens einer Lagerringanordnung, umfassend:
mindestens einen Sensor, der Deformation eines Lagerrings der mindestens einen Lageranordnung des schwenkbaren Rotorflügels detektiert, und **gekennzeichnet durch**
eine Auswertungsvorrichtung, die die Belastung des Rotorflügels aus **durch** den mindestens einen Sensor detektierter Deformation des Lagerrings bestimmt.

2. Vorrichtung nach Anspruch 1, wobei es sich bei mindestens einem Sensor um mindestens zwei Näherungssensoren handelt.

3. Vorrichtung nach Anspruch 2, wobei die mindestens zwei Näherungssensoren die Deformation des Lagerrings in axialer und radialer Richtung relativ zu einer Rotationsachse des Lagers detektieren.

4. Vorrichtung nach Anspruch 2 oder 3, wobei die mindestens zwei Näherungssensoren die Deformation des Lagerrings in zwei verschiedenen Richtungen des Lagerrings detektieren, die relativ zu einer Rotationsachse des Lagers radial verlaufen.

5. Vorrichtung nach Anspruch 1, wobei mindestens ein Sensor ein faseroptischer Sensor ist.

6. Vorrichtung nach Anspruch 5, wobei der faseroptische Sensor ein FBG-Sensor ist.

7. Vorrichtung nach mindestens einem der vorhergehenden Ansprüche, die ferner mindestens einen Neigungsmesser umfasst.

8. Vorrichtung nach Anspruch 7, wobei der Neigungsmesser in axialer und/oder radialer Richtung der Rotornabe misst.

9. Verfahren zur Bestimmung der Belastung eines Rotorflügels mit einem Lagerring, das die folgenden Schritte umfasst:
Detektieren von Deformation eines Lagerrings der Lageranordnung des Rotorflügels und **gekennzeichnet durch**
Bestimmen der Belastung des Rotorflügels aus der detektierten Deformation des Lagerrings.

10. Verfahren nach Anspruch 9, wobei die Deformation des Lagerrings in mehreren Dimensionen bestimmt wird.

11. Verfahren nach Anspruch 10, wobei die Deformation des Lagerrings in radialer und axialer Richtung relativ zu einer Rotationsachse des Lagers bestimmt wird.

12. Verfahren nach mindestens einem der Ansprüche 9-11, wobei die Winkelstellung einer Rotornabe, die mit dem Rotorflügel verbunden ist, bestimmt wird.

13. Verfahren nach mindestens einem der Ansprüche 9-12, wobei die Winkelstellung des Rotorflügels bei der Bestimmung der Belastung des Rotorflügels berücksichtigt wird.

14. Verfahren nach Anspruch 12, wobei die Winkelstellung einer Rotornabe, die mit dem Rotorflügel verbunden ist, bei der Bestimmung der Belastung des Rotorflügels berücksichtigt wird.

15. Verfahren nach Anspruch 14, wobei die Winkelstellung einer Rotornabe in mindestens einer axialen und radialen Richtungen der Rotationsachse der Rotornabe bestimmt wird.

16. Verfahren nach Anspruch 9, wobei mindestens teilweise auf der Basis der bestimmten Belastung an dem Rotorflügel eine Justierung der Drehstellung des Rotorflügels durchgeführt wird.

17. Verfahren nach Anspruch 9, wobei mindestens teilweise auf der Basis der bestimmten Last an dem Rotorflügel eine Justierung der Stellung von Teilen des Rotorflügels durchgeführt wird.

18. Verfahren nach Anspruch 9, wobei mindestens teilweise auf der Basis der bestimmen Belastung an dem Rotorflügel eine Justierung zum dynamischen Ausgleich des Rotorflügels durchgeführt wird.

## Revendications

1. Dispositif de mesure de la charge d'au moins une pale de rotor pivotante avec au moins un système de palier annulaire, comprenant :
au moins un capteur qui détecte une déformation d'un palier annulaire du ou des systèmes de palier annulaire de la pale de rotor pivotante, et **caractérisé par**
un dispositif d'évaluation qui détermine la charge de la pale de rotor à partir de la déformation du palier annulaire détectée par le ou les capteurs.

2. Dispositif selon la revendication 1, dans lequel au moins un capteur est constitué d'au moins deux capteurs de proximité.

3. Dispositif selon la revendication 2, dans lequel les au moins deux capteurs de proximité détectent la déformation du palier annulaire dans les directions axiale et radiale par rapport à un axe de rotation du palier.

4. Dispositif selon la revendication 2 ou 3, dans lequel les au moins deux capteurs de proximité détectent la déformation du palier annulaire dans deux directions différentes du palier annulaire qui s'étendent radialement par rapport à l'axe de rotation du palier.

5. Dispositif selon la revendication 1, dans lequel au moins un capteur est un capteur à fibres optiques.

6. Dispositif selon la revendication 5, dans lequel le capteur à fibres optiques est un capteur à fibres optiques à réseau de Bragg.

7. Dispositif selon au moins une des revendications précédentes, comprenant en outre au moins un inclinomètre.

8. Dispositif selon la revendication 7, dans lequel l'inclinomètre effectue des mesures dans la direction axiale et/ou la direction radiale du moyeu de rotor.

9. Procédé de détermination de la charge d'une pale de rotor avec un palier annulaire, comprenant les étapes suivantes :
détecter une déformation d'un palier annulaire du système de palier de la pale de rotor, et **caractérisé par**:
déterminer la charge de la pale de rotor à partir de la déformation détectée du palier annulaire.

10. Procédé selon la revendication 9, dans lequel la déformation du palier annulaire est déterminée dans plusieurs dimensions.

11. Procédé selon la revendication 10, dans lequel la déformation du palier annulaire est déterminée dans les directions radiale et axiale par rapport à un axe de rotation du palier.

12. Procédé selon au moins une des revendications 9 à 11, dans lequel la position angulaire d'un moyeu de rotor qui est raccordé à la pale de rotor est déterminée.

13. Procédé selon au moins une des revendications 9 à 12, dans lequel la position angulaire de la pale de rotor est prise en compte lors de la détermination de la charge de la pale de rotor.

14. Procédé selon la revendication 12, dans lequel la position angulaire d'un moyeu de rotor qui est raccordé à la pale de rotor est prise en compte lors de la détermination de la charge de la pale de rotor.

15. Procédé selon la revendication 14, dans lequel la position angulaire d'un moyeu de rotor est déterminée dans les directions axiale et/ou radiale de l'axe de rotation du moyeu de rotor.

16. Procédé selon la revendication 9, dans lequel un ajustement de la position en rotation de la pale de rotor est effectué sur la base, au moins en partie, de la charge déterminée sur la pale de rotor.

17. Procédé selon la revendication 9, dans lequel un ajustement de la position de parties de la pale de rotor est effectué sur la base, au moins en partie, de la charge déterminée sur la pale de rotor.

18. Procédé selon la revendication 9, dans lequel un ajustement à des fins d'équilibrage dynamique de la pale de rotor est effectué sur la base, au moins en partie, de la charge déterminée sur la pale de rotor.
